# EUROPÄISCHE PATENTANMELDUNG

(11) **EP 4 274 062 A1**
(43) Veröffentlichungstag der Anmeldung: **08.11.2023**
(21) Anmeldenummer: 22171838.0
(22) Anmeldetag: 05.05.2022
(51) Int. Cl.: H02K 1/2793, H02K 1/30, H02K 15/08, H02K 15/12, H02K 1/02

(54) **ROTOR FÜR EINEN ELEKTROMOTOR UND VERFAHREN ZUR HERSTELLUNG**

(71) Anmelder: Schunk Kohlenstofftechnik GmbH, 35452 Heuchelheim (DE)
(72) Erfinder: KÖSTER, Fabian, 35039 Marburg (DE); KROOß, Tim, 35432 Lich (DE)
(74) Vertreter: advotec.

(57) **Zusammenfassung**

Die Erfindung betrifft einen Rotor (10) für einen Elektromotor, insbesondere bürstenloser Scheibenläufermotor, Synchronmotor, Schrittmotor oder dergleichen, sowie ein Verfahren zu Herstellung eines Rotors, wobei der Rotor Magnete (11) aufweist, die an zumindest einer Axialseite (12) des Rotors angeordnet sind, wobei der Rotor einen Rotorkörper (13) umfasst, wobei der Rotorkörper Aufnahmen (14) ausbildet, die die Magnete haltern, wobei der Rotorkörper mit einem Außenring (19) einer Rotornabe (20), zur Kopplung mit einer Motorwelle des Elektromotors, und einem Aussteifungselement (21), zur Verbindung von Außenring und Rotornabe, ausgebildet ist, wobei das Aussteifungselement mit zwischen dem Außenring und der Rotornabe sternförmig verlaufenden Streben (22) ausgebildet ist, wobei das Aussteifungselement aus einem Faserverbundwerkstoff mit einem Faserstrang ausgebildet ist.

## Beschreibung

Die Erfindung betrifft einen Rotor für einen Elektromotor, ein Verfahren zur dessen Herstellung sowie einen Elektromotor, insbesondere bürstenloser Scheibenläufermotor, Synchronmotor, Schrittmotor oder dergleichen, wobei der Rotor Magnete aufweist, die an zumindest einer Axialseite des Rotors angeordnet sind, wobei der Rotor einen Rotorkörper umfasst, wobei der Rotorkörper Aufnahmen ausbildet, die die Magnete haltern.

Derartige Rotoren bzw. Elektromotoren sind aus dem Stand der Technik hinreichend bekannt und werden in verschiedenen Bauformen für unterschiedlichste Anwendungen eingesetzt. In einer der Bauformen ist der Rotor so ausgebildet, dass an diesem Permanentmagnete angeordnet bzw. gehaltert sind. Die Permanentmagnete befinden sich dann an einer Axialseite des scheibenförmigen Rotors. Dabei ist der Rotor bzw. ein sogenannter Scheibenläufer im Wesentlichen so ausgebildet, dass ein Durchmesser des Rotors größer ist als dessen Länge. Ein Stator des Elektromotors ist dann gegenüber einer Axialseite des Rotors, an der die Permanentmagnete angeordnet sind, positioniert. Der Stator weist dann Spulen auf, die gegenüberliegend der Axialseite des Rotors angeordnet sind. Vorteilhaft bei dieser Bauform eines Elektromotors ist, dass keine Bürsten zur Stromzuführung auf den Rotor benötigt werden und der Elektromotor damit sehr zuverlässig betrieben werden kann.

Bei den aus dem Stand der Technik bekannten Rotoren ist ein Rotorkörper mit Aufnahmen ausgebildet, in die die Magnete bzw. Permanentmagnete eingesetzt sind. Dieser scheibenförmige Rotorkörper ist dabei regelmäßig aus Aluminium ausgebildet, da dieses kostengünstig und einfach spanend bearbeitbar ist. So können die Aufnahmen der Magnete einfach durch Fräsen von Taschen in dem Rotorkörper ausgebildet werden. Gleichzeitig kann durch die Verwendung eines Leichtmetalls für den Rotorkörper ein Rotor mit geringer Masse hergestellt werden, was eine mögliche Beschleunigung des Elektromotors verbessert.

Als nachteilig hat sich jedoch herausgestellt, dass bei sehr hohen Drehzahlen des Rotors, beispielsweise bei bis zu 40.000 bis 50.000 Umdrehungen pro Minute, die Magnete das vergleichsweise weiche Aluminium verformen können. Zwar ist es auch bekannt, den Rotorkörper mit einem umfänglichen Ring aus einem vergleichsweise festen Material zu versehen, um einer möglichen Verformung entgegenzuwirken, jedoch werden offenbar die Magnete aufgrund der hohen Fliehkräfte bei hohen Umdrehungsgeschwindigkeiten innerhalb der Aufnahmen an eine Radialseite der jeweiligen Aufnahmen gepresst. Hierbei kann es zu einer plastischen Verformung am Rotorkörper kommen, bis hin zu einer irreversiblen Beschädigung des Rotors.

Der vorliegenden Erfindung liegt daher die Aufgabe zugrunde, einen Rotor für einen Elektromotor, einen Elektromotor sowie ein Verfahren zur Herstellung eines Rotors vorzuschlagen, der bzw. das einen verlässlichen Betrieb eines Elektromotors ermöglicht.

Diese Aufgabe wird durch einen Rotor mit den Merkmalen des Anspruchs 1, einen Elektromotor mit den Merkmalen des Anspruchs 12, ein Verfahren zu Herstellung eines Rotors mit den Merkmalen des Anspruchs 13 sowie eine Verwendung eines Aussteifungselements für einen Rotor mit den Merkmalen des Anspruchs 19 gelöst.

Der erfindungsgemäße Rotor für einen Elektromotor, insbesondere bürstenloser Scheibenläufermotor, Synchronmotor, Schrittmotor oder dergleichen, weist Magnete auf, die an zumindest einer Axialseite des Rotors angeordnet sind, wobei der Rotor einen Rotorkörper umfasst, wobei der Rotorkörper Aufnahmen ausbildet, die die Magnete haltern, wobei der Rotorkörper mit einem Außenring, einer Rotornabe, zur Kopplung mit einer Motorwelle des Elektromotors, und einem Aussteifungselement zur Verbindung von Außenring und Rotornabe, ausgebildet ist, wobei das Aussteifungselement mit zwischen dem Außenring und der Rotornabe sternförmig verlaufenden Streben ausgebildet ist, wobei das Aussteifungselement aus einem Faserverbundwerkstoff mit einem Faserstrang ausgebildet ist.

Der Außenring des Rotorkörpers ist dabei geschlossen ausgebildet, sodass durch den Außenring in Art einer Armierung des Rotorkörpers jegliche unerwünschte Verformung des Rotorkörpers verhindert und ein möglichst dünner Luftspalt zwischen dem Rotor und einem Stator ausgebildet werden kann. Weiter weist der Rotorkörper die Rotornabe auf, die zur Verbindung mit einer Motorwelle des Elektromotors ausgebildet ist. Die Rotornabe kann dabei so beschaffen sein, dass die Motorwelle des Elektromotors durch den Rotorkörper hindurch geführt oder mit einem Ende an dem Rotorkörper befestigt ist, beispielsweise mittels eines Flansches. Das Aussteifungselement verbindet den Außenring und die Rotornabe und weist in einer radialen Richtung verlaufende, speichenartige Streben auf. Die Streben sind dabei in etwa sternförmig zwischen dem Außenring und der Rotornabe ausgebildet. Das Aussteifungselement besteht aus einem Faserverbundwerkstoff und wurde durch Wickeln eines Faserstrangs ausgebildet. Da dann auch die Streben durch den Faserstrang ausgebildet sind, können die Streben mit einer sehr großen Zugkraft, die in einer Faserrichtung des Faserstrang wirkt, belastet werden. Hierdurch ergibt sich einerseits der Vorteil, dass der Rotorkörper bzw. das Aussteifungselement mit geringem Materialeinsatz und damit besonders leicht und andererseits auch besonders stabil gegenüber Verformungen bzw. radiale Fliehkräfte der Magnete ausgebildet werden kann. Da der Faserstrang bei dem Wickeln wiederholt von dem Außenring zu der Rotornabe und zurück angeordnet wird, und so die Streben ausbildet, können die Magnete so an der Axialseite bzw. zwischen den Streben angeordnet werden, dass auch eine Radialseite der Aufnahmen der Magnete von dem Faserstrang ausgebildet ist. Hierdurch ergibt sich eine vorteilhafte Ausbildung des Aussteifungselements an einen durch die Magnete in den Aufnahmen bewirkten Lastfall. Der Rotor kann beispielsweise mit zumindest 40.000 und bis zu 50.000 U/min betrieben werden.

Das Aussteifungselement kann aus einem einzelnen Faserstrang, bevorzugt Rowing oder Faserband, einstückig ausgebildet sein. Durch die Ausbildung des Aussteifungselements aus einem einzigen Faserstrang, beispielsweise durch Wickeln des Rowings oder Faserbands, kann das Aussteifungselement bzw. die untereinander so verbundenen Streben, mit besonders großen Zugkräften belastet werden. Die Streben können dann vergleichsweise dünn und folglich mit geringem Materialeinsatz ausgebildet werden. Prinzipiell ist jedoch auch die Verwendung mehrerer Faserstränge zur Ausbildung des Aussteifungselements möglich. Unter einem Rowing wird hier ein Faserbündel, Strang oder Filamentgarn aus parallel angeordneten Filamenten bzw. Endlosfasern mit im Wesentlichen einem kreisförmigen Querschnitt und unter einem Faserband ein Faserbündel, Strang oder Filamentgarn aus parallel angeordneten Filamenten mit im Wesentlichen einem rechteckigen Querschnitt, beispielsweise mit gegenüber einer Höhe vergleichsweise großer Breite, verstanden.

Das Aussteifungselement kann aus Glasfasern, Aramidfasern oder Kohlenstofffasern und einem Kunststoffharz ausgebildet sein. Das Kunststoffharz bildet dabei eine Matrix des Faserverbundwerkstoffs aus und ist ausgehärtet. Das Kunststoffharz kann ein duroplastisches oder thermoplastisches Harz, beispielsweise Epoxidharz, sein. Das Aussteifungselement lässt sich dann besonders kostengünstig und einfach herstellen. Eine thermoplastische Matrix ermöglicht darüber hinaus eine zeitliche Trennung von Umform- und Fügeprozessen bei der Herstellung. Ein Fügen kann dann auch ohne zusätzliche Klebstoffe, beispielsweise mittels Schweißen, wie Ultraschallschweißen, erfolgen. Gegenüber einer duroplastischen Matrix weist die thermoplastische Matrix eine verlängerte Lagerfähigkeit auf ist ungiftig und leicht recyclebar.

Alternativ kann das Aussteifungselement aus kohlenstofffaserverstärktem Kohlenstoff ausgebildet sein. Das Aussteifungselement kann dann auch aus einem Aussteifungselement mit organischen Fasern und einer organischen Matrix durch Pyrolyse hergestellt sein. Ein derart ausgebildetes Aussteifungselement ist auch bei hohen Temperaturen mechanisch hoch belastbar.

Der Außenring und/oder die Nabe können aus dem gleichen Material wie das Aussteifungselement ausgebildet sein. Folglich ist es möglich, den gesamten Rotorkörper aus diesem Material auszubilden. Eine Herstellung des Rotorkörpers kann so besonders einfach erfolgen, da der Faserverbundwerkstoff der jeweiligen Bauteile des Rotorkörpers in einem Arbeitsschritt ausgehärtet werden kann. Dabei kann der Außenring und/oder die Nabe stoffschlüssig über dem Faserverbundwerkstoff miteinander verbunden sein.

So kann der Rotorkörper einstückig oder mehrteilig ausgebildet sein. Bei der einstückigen Ausbildung des Rotorkörpers kann dieser, wie zuvor ausgeführt, einfach und stabil ausgebildet werden. Gleichfalls ist es auch möglich, den Rotorkörper alternativ mehrteilig auszubilden, beispielsweise dadurch, dass die Rotornabe durch Schrauben oder andere Befestigungsmittel an dem Aussteifungselement befestigt ist. Die Rotornabe kann dann auch aus einem anderen Material als das Aussteifungselement ausgebildet sein, wie beispielsweise Aluminium.

Der Rotor kann scheibenförmig oder zylinderförmig ausgebildet sein. Der Rotor kann dann zur Verwendung mit einem Scheibenläufermotor oder auch mit einem Synchronmotor, Schrittmotor oder dergleichen ausgebildet sein. Insbesondere kann auch vorgesehen sein, dass an gegenüberliegenden Axialseiten des Rotors bzw. Rotorkörpers Aufnahmen ausgebildet sind, die ebenfalls Magnete haltern.

Die Aufnahmen können in einem Zwischenraum der Streben ausgebildet sein. Da die Streben den Außenring und die Rotornabe verbinden, sind die Streben so voneinander beabstandet, dass von Strebe zu Strebe ein Zwischenraum, der von dem Außenring und der Rotornabe begrenzt ist, ausgebildet ist. Dieser Zwischenraum kann so beschaffen sein, dass hierin ein ausreichender Platz zur Anordnung eines oder mehrere Magnete geschaffen ist. Der Zwischenraum kann dabei so ausgestaltet sein, dass er nur teilweise oder auch vollständig von einem Magnet ausgefüllt ist.

Die Magnete können jeweils als eine keilförmige Platte ausgebildet sein. Dabei kann die Platte in Art eines Parallelogramms, mit zueinander geneigten Seitenkanten, ausgebildet sein. Eine die Seitenkanten verbindende Grundlinie kann gerade oder mit einem Radius, beispielsweise angepasst an einen Radius des Rotors, ausgebildet sein. So können Magnete mit einer vergleichsweise großen Masse dicht an einem Umfang des Rotors positioniert werden. Darüber hinaus können diese Magnete einfach aus einem plattenförmigen Materialzuschnitt hergestellt werden.

Die Aufnahmen können als Taschen ausgebildet sein, in die die Magnete eingesetzt sind, wobei die Taschen die Magnete jeweils zumindest teilweise, vorzugsweise vollständig an ihrem Umfang umgeben. Prinzipiell können die Taschen so ausgebildet sein, dass die Magnete bündig an der Axialseite des Rotors abschließen. Die Axialseite des Rotors kann dann ohne wesentliche Unterbrechungen oder Absätze mit einer in sich geschlossenen Oberfläche ausgebildet sein. So kann dann ein besonders dünner Luftspalt zwischen der Axialseite des Rotors und einem Stator ausgebildet werden. Auch die Taschen können vollständig durch Wickeln des Faserstrangs bzw. Rowings oder Faserbands hergestellt sein, ohne dass es einer zusätzlichen mechanischen Bearbeitung der Taschen, wie beispielsweise durch Fräsen, bedarf.

Der Rotorkörper kann mit einer kreisringförmigen Wand ausgebildet sein, wobei die Wand einen Boden der jeweiligen Aufnahmen ausbildet. Die Wand kann in Art einer Scheibe ausgebildet sein, die sich von dem Außenring zu der Rotornabe hin erstreckt. Die Wand kann ebenfalls aus einem Faserverbundwerkstoff ausgebildet sein und folglich den Außenring und die Rotornabe verbinden, wodurch der Rotorkörper noch stabiler ausgebildet werden kann. Durch die Wand kann auch verhindert werden, dass die Magnete, die in die Aufnahmen eingesetzt sind, aus diesen herausfallen. Da die Wand dann den Boden der jeweiligen Aufnahme eines Magneten ausbildet, kann der Magnet auch einfach in der Aufnahme fixiert werden, beispielsweise mittels Klebermaterial. Die Magnete können auch unmittelbar bei der Herstellung des Rotorkörpers in diesen eigearbeitet bzw. umwickelt werden.

Der erfindungsgemäße Elektromotor, insbesondere bürstenloser Scheibenläufermotor, Synchronmotor, Schrittmotor oder dergleichen, umfasst einen erfindungsgemäßen Rotor und einen Stator, wobei der Stator Spulen aufweist, die gegenüberliegend an zumindest einer Axialseite des Rotors angeordnet sind. Zwischen der Axialseite des Rotors und einer Axialseite des Stators kann ein vergleichsweise dünner Luftspalt ausgebildet sein.

Bei dem erfindungsgemäßen Verfahren zur Herstellung eines Rotors, für einen Elektromotor, insbesondere bürstenloser Scheibenläufermotor, Synchronmotor, Schrittmotor oder dergleichen, werden an zumindest einer Axialseite des Rotors Magnete des Rotors angeordnet, wobei die Magnete in Aufnahmen eines Rotorkörpers des Rotors gehaltert werden, wobei der Rotorkörper mit einem Außenring, einer Rotornabe, zur Kopplung mit einer Motorwelle des Elektromotors, und einem Aussteifungselement zu Verbindung von Außenring und Rotornabe, ausgebildet wird, wobei das Aussteifungselement mit zwischen dem Außenring und der Rotornabe sternförmig verlaufenden Streben ausgebildet wird, wobei das Aussteifungselement aus einem Faserverbundwerkstoff mit einem Faserstrang ausgebildet wird. Zu den vorteilhaften Wirkungen des Verfahrens wird auf die Vorteilsbeschreibung des erfindungsgemäßen Rotors verwiesen.

Das Aussteifungselement kann in einer Abfolge von Arbeitsschritten ausgebildet werden:
a). Ausbilden einer ringförmigen Wicklung durch Imprägnieren und Wickeln des Faserstrangs auf einem Umfang einer aus Aufnahmesegmenten gebildeten Aufnahmeeinrichtung;
b). Umformen der Wicklung mittels Umformsegmente in zwischen den Aufnahmesegmenten ausgebildeten Umformbereichen durch eine Bewegung der Umformsegmente auf ein Symmetriezentrum der Aufnahmeeinrichtung hin;
c). Aushärten des Faserverbundwerkstoffs.

Zum Ausbilden der ringförmigen Wicklung kann ein Prepreg oder ein nicht imprägnierter Faserstrang verwendet werden, wobei dann eine Imprägnierung zu einem späteren Zeitpunkt, nach Ausbilden der Wicklung, erfolgen kann. Die Aufnahmesegmente können Bestandteile einer Wickelvorrichtung sein. Die Aufnahmesegmente können keilförmig und in Richtung des Symmetriezentrums hin bzw. von dem Symmetriezentrum weg bewegbar ausgebildet sein. Auch können die Aufnahmesegmente ein Stück weit voneinander beabstandet sein. Beispielsweise können die Aufnahmesegmente kreissegmentförmig ausgebildet sein, derart dass sich an dem Umfang der Aufnahmesegmente die im Wesentlichen ringförmige Wicklung aus dem Faserstrang ausbilden lässt. Nach dem Ausbilden der Wicklung kann diese dann mittels der Umformsegmente der Wickelvorrichtung umgeformt werden. Die Umformsegmente können ebenfalls keil- bzw. kreissegmentförmig ausgebildet sein und die ringförmige Wicklung in die zwischen den Aufnahmesegmenten ausgebildeten Umformbereiche hin umformen. Dabei bewegen sich die Umformsegmente dann in Richtung des Symmetriezentrums der Aufnahmeeinrichtung zusammen mit den Aufnahmesegmenten, sodass mit dieser Bewegung Streben ausgebildet werden. Hiernach kann der Faserverbundwerkstoff ausgehärtet und aus der Wickelvorrichtung entnommen werden.

Weiter kann nach dem Arbeitsschritt b). und vor dem Arbeitsschritt c). der Außenring durch Ausbildung einer zweiten ringförmigen Wicklung durch Imprägnieren und Wickeln eines zweiten Faserstrangs bzw. Rowings oder Faserbands auf den Umfang der Aufnahmeeinrichtung ausgebildet werden. Wenn das Aussteifungselement durch Umformen der ringförmigen Wicklung in seine vorgesehene Form gebracht ist, kann folglich der Außenring ebenfalls auf den Aufnahmesegmenten und den Umformsegmenten, deren jeweilige Außenseiten einen übereinstimmenden Durchmesser mit der Aufnahmeeinrichtung ausbilden können, ausgebildet werden. Dabei kann eine zweite ringförmige Wicklung mit einem zweiten Faserstrang auf den Umfang so aufgebracht werden, dass der Außenring ausgebildet ist. Auch hier kann ein Prepreg verwendet werden. Bei dem Aushärten des Faserverbundwerkstoffs kann dann der Außenring zusammen mit dem Aussteifungselement ausgehärtet und so stoffschlüssig verbunden werden.

Vor dem Arbeitsschritt a). kann die Rotornabe durch Ausbilden einer weiteren ringförmigen Wicklung durch Imprägnieren und Wickeln eines weiteren Faserstrangs bzw. Rowings oder Faserbands auf einen Kern der Aufnahmeeinrichtung, der einen Durchmesser der Motorwelle aufweisen kann, ausgebildet werden. Der Rotorkörper kann dann unmittelbar auf der Motorwelle montiert werden Auch ist es dann möglich die Rotornabe aus dem Faserverbundwerkstoff auszubilden und zusammen mit dem Aussteifungselement und gegebenenfalls dem Außenring auszuhärten. Zumindest die stoffschlüssige Verbindung von Aussteifungselement und Rotornabe wird so möglich.

Die Magnete können vor oder nach dem Arbeitsschritt c). angeordnet werden. Eine Magnetisierung der Magnete kann vor oder nach einer Anordnung der Magnete am Rotorkörper erfolgen. Eine Abfolge der Arbeitsschritte zur Herstellung kann so optimiert werden.

Der Außenring kann mit einer Vorspannung ausgebildet werden. Die Vorspannung kann bereits bei einem Wickeln des zweiten Faserstrangs ausgebildet werden, wodurch eine Festigkeit des Rotorkörpers erhöht werden kann.

Weitere vorteilhafte Ausführungsformen des Verfahrens ergeben sich aus den Merkmalsbeschreibungen der auf den Vorrichtungsanspruch 1 rückbezogenen Unteransprüche.

Erfindungsgemäß wird ein Aussteifungselement für einen Rotor eines Elektromotors, insbesondere bürstenloser Scheibenläufermotor, Synchronmotor, Schrittmotor oder dergleichen, verwendet, wobei das Aussteifungselement mit zwischen einem Außenring und einer Rotornabe eines Rotorkörpers des Rotors sternförmig verlaufenden Streben ausgebildet ist, wobei das Aussteifungselement zur Verbindung von Außenring und Rotornabe ausgebildet ist, wobei das Aussteifungselement aus einem Faserverbundwerkstoff mit einem Faserstrang ausgebildet ist. Zu den Vorteilen der erfindungsgemäßen Verwendung wird auf die Vorteilsbeschreibung des erfindungsgemäßen Rotors verwiesen. Weitere vorteilhafte Ausführungsformen einer Verwendung ergeben sich aus den Merkmalsbeschreibungen der auf dem Vorrichtungsanspruch 1 rückbezogenen Unteransprüche.

Nachfolgend wird die Erfindung unter Bezugnahme auf die beigefügten Zeichnungen näher erläutert:
Es zeigen:
- **Fig. 1**: Eine axiale Ansicht eines Rotors;
- **Fig. 2**: eine Schnittansicht entlang einer Linie II-II aus **Fig. 1****;**
- **Fig. 3a**: eine schematische Darstellung eines ersten Arbeitsschritts zur Herstellung eines Aussteifungselements;
- **Fig. 3b**: eine schematische Darstellung eines zweiten Arbeitsschritts zur Herstellung des Aussteifungselements;
- **Fig. 3c**: eine schematische Darstellung eines dritten Arbeitsschritts zur Herstellung des Aussteifungselements.

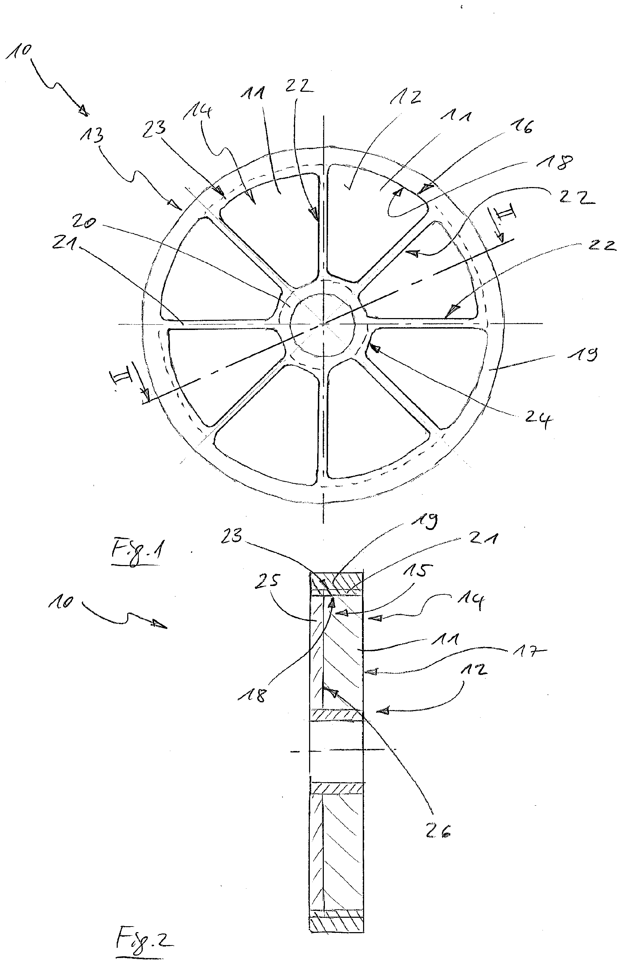

Eine Zusammenschau der **Fig. 1** und **2** zeigt eine schematische Prinzipdarstellung eines Rotors 10 für einen Elektromotor, wobei der Rotor 10 Magnete 11 aufweist, die an zumindest einer Axialseite 12 des Rotors 10 angeordnet sind. Der Rotor 10 umfasst einen Rotorkörper 13, der Aufnahmen 14 für die Magnete 11 ausbildet. Die Aufnahmen 14 sind hier als Taschen 15 ausgebildet, in die die Magnete 11 eingesetzt, und vollständig an ihrem Umfang 16 von der Aufnahme 14 umgeben sind. Die Magnete 11 sind jeweils als eine keilförmige Platte 17 ausgebildet, die bei einer Rotation des Rotors 11 an eine Radialseite 18 der jeweiligen Aufnahme 14 in Folge einer darauf bewirkten Fliehkraft gepresst werden.

Der Rotorkörper 13 ist weiter mit einem geschlossenen Außenring 19, einer Rotornabe 20, zur Kopplung mit einer hier nicht dargestellten Motorwelle eines Elektromotors, und einem Aussteifungselement 21 ausgebildet. Das Aussteifungselement 21 verbindet den Außenring 19 mit der Rotornabe 20 mittels sternförmig verlaufender Streben 22. Das Aussteifungselement 21 ist aus einem Faserverbundwerkstoff mit einem Faserstrang bzw. Rowing oder Faserband, der hier nicht weiter ersichtlich ist, ausgebildet. Auch der Außenring 19 und die Rotornabe 20 bestehen aus einem Faserverbundwerkstoff gleicher Art. Da diese Faserverbundwerkstoffe gleichzeitig ausgehärtet wurden, ist der Rotorkörper 13 einstückig ausgebildet. Das Aussteifungselement ist mit einem einzelnen Faserstrang durch Wickeln hergestellt, sodass die jeweiligen Streben wechselseitig über äußere Stege 23 und innere Stege 24 miteinander verbunden sind. Die äußeren Stege 23 sind stoffschlüssig mit dem Außenring 19, und die inneren Stege 24 mit sind stoffschlüssig mit der Rotornabe 20 verbunden. Weiter ist der Rotorkörper 13 mit einer kreisringförmigen Wand 25 ausgebildet, die ebenfalls aus einem Faserverbundwerkstoff besteht und einen Boden 26 der Aufnahmen 14 ausbildet.

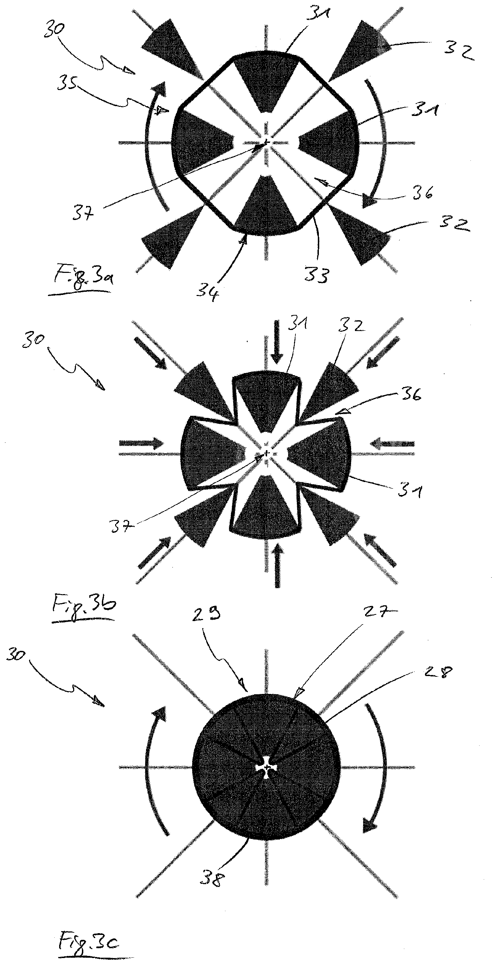

Die **Fig. 3a** bis **3c** zeigen beispielhaft und schematisch eine Abfolge von Arbeitsschritten zur Herstellung eines Aussteifungselements 27 mit einem Außenring 28 eines Rotorkörpers 29 für einen Rotor in der zuvor beschriebenen Art für einen Elektromotor. Eine Rotornabe sowie Magnete sind hier nicht gezeigt. Die Herstellung erfolgt gemäß **Fig. 3a** mit einer Wickelvorrichtung 30 mit Aufnahmesegmenten 31 und Umformsegmenten 32. Zunächst wird eine ringförmige Wicklung 33, bestehend aus einem einzelnen Faserstrang, auf einem Umfang 34 einer aus den Aufnahmesegmenten 31 gebildeten Aufnahmeeinrichtung 35 aufgebracht. Die Wicklung 33 wird mit einem härtbaren Harz imprägniert oder der Faserstrang ist bereits beim Aufbringen imprägniert bzw. es wird ein Prepreg verwendet. In dem in **Fig. 3b** gezeigten Arbeitsschritt wird die Wicklung 33 mittels der Umformsegmente 32 in zwischen den Aufnahmesegmenten 31 ausgebildeten Umformbereich 36 durch eine Bewegung der Umformsegmente 32 auf ein Symmetriezentrum 37 der Aufnahmeeinrichtung 35 hin umgeformt. Dabei werden ebenfalls die Aufnahmesegmente 31 in Richtung auf das Symmetriezentrum 37 hin bewegt, sodass die in der **Fig. 3c** dargestellte Form des Aussteifungselements 27 erhalten wird. Weiter wird gemäß des in der **Fig. 3c** gezeigten weiteren Arbeitsschritts eine zweite ringförmige Wicklung 38 mit einem hier nicht näher ersichtlichen zweiten Faserstrang bzw. Rowing oder Faserband auf den Umfang 34 der Aufnahmeeinrichtung 35 aufgebracht und imprägniert bzw. ein bereits imprägnierter Faserstrang bzw. Prepreg verwendet. Mit der zweiten Wicklung 38 wird der Außenring 28 ausgebildet. Abschließend erfolgt ein Aushärten des Harzes, sodass das Aussteifungselement 27 und der Außenring 28 stoffschlüssig verbunden und fertiggestellt sind. Abschließend kann dieser so hergestellte Rotorkörper 29 aus der Wickelvorrichtung 30 entnommen werden.

## Patentansprüche

1. Rotor (10) für einen Elektromotor, insbesondere bürstenloser Scheibenläufermotor, Synchronmotor, Schrittmotor oder dergleichen, wobei der Rotor Magnete (11) aufweist, die an zumindest einer Axialseite (12) des Rotors angeordnet sind, wobei der Rotor einen Rotorkörper (13, 29) umfasst, wobei der Rotorkörper Aufnahmen (14) ausbildet, die die Magnete haltern,
**dadurch gekennzeichnet,**
**dass** der Rotorkörper mit einem Außenring (19, 28), einer Rotornabe (20), zur Kopplung mit einer Motorwelle des Elektromotors, und einem Aussteifungselement (21, 27), zur Verbindung von Außenring und Rotornabe, ausgebildet ist, wobei das Aussteifungselement mit zwischen dem Außenring und der Rotornabe sternförmig verlaufenden Streben (22) ausgebildet ist, wobei das Aussteifungselement aus einem Faserverbundwerkstoff mit einem Faserstrang ausgebildet ist.

2. Rotor nach Anspruch 1,
**dadurch gekennzeichnet ,**
**dass** das Aussteifungselement (21, 27) aus einem einzelnen Faserstrang, bevorzugt Rowing oder Faserband, einstückig ausgebildet ist.

3. Rotor nach Anspruch 1 oder 2,
**dadurch gekennzeichnet ,**
**dass** das Aussteifungselement (21, 27) aus Glasfasern, Aramidfasern oder Kohlenstoffasern und einen Kunststoffharz ausgebildet ist.

4. Rotor nach Anspruch 1 oder 2,
**dadurch gekennzeichnet ,**
**dass** das Aussteifungselement (21, 27) aus kohlenstofffaserverstärkten Kohlenstoff ausgebildet ist.

5. Rotor nach einem der vorangehenden Ansprüche,
**dadurch gekennzeichnet ,**
**dass** der Außenring (19, 28) und/oder die Nabe aus dem gleichen Material wie das Aussteifungselement (21, 27) ausgebildet sind.

6. Rotor nach einem der vorangehenden Ansprüche,
**dadurch gekennzeichnet ,**
**dass** der Rotorkörper (13, 19) einstückig oder mehrteilig ausgebildet ist.

7. Rotor nach einem der vorangehenden Ansprüche,
**dadurch gekennzeichnet ,**
**dass** der Rotor (10) scheibenförmig oder zylinderförmig ausgebildet ist.

8. Rotor nach einem der vorangehenden Ansprüche,
**dadurch gekennzeichnet ,**
**dass** die Aufnahmen (14) in einem Zwischenraum der Streben (22) ausgebildet sind.

9. Rotor nach einem der vorangehenden Ansprüche,
**dadurch gekennzeichnet ,**
**dass** die Magnete (11) jeweils als eine keilförmige Platte (17) ausgebildet sind.

10. Rotor nach einem der vorangehenden Ansprüche,
**dadurch gekennzeichnet ,**
**dass** die Aufnahmen (14) als Taschen (15) ausgebildet sind, in die die Magnete (11) eingesetzt sind, wobei die Taschen die Magnete jeweils zumindest teilweise, bevorzugt vorzugsweise vollständig an ihrem Umfang (16) umgeben.

11. Rotor nach einem der vorangehenden Ansprüche,
**dadurch gekennzeichnet ,**
**dass** der Rotorkörper (13, 29) mit einer kreisringförmigen Wand (25) ausgebildet ist, wobei die Wand einen Boden (26) der jeweiligen Aufnahmen (14) ausbildet.

12. Elektromotor, insbesondere bürstenloser Scheibenläufermotor, Synchronmotor, Schrittmotor oder dergleichen, mit einem Rotor (10) nach einem der vorangehenden Ansprüche und einem Stator, wobei der Stator Spulen aufweist, die gegenüberliegend an zumindest einer Axialseite (12) des Rotors angeordnet sind.

13. Verfahren zur Herstellung eines Rotors (10), für einen Elektromotor, insbesondere bürstenloser Scheibenläufermotor, Synchronmotor, Schrittmotor oder dergleichen, wobei an zumindest einer Axialseite (12) des Rotors Magnete (11) des Rotors angeordnet werden, wobei die Magnete in Aufnahmen (14) eines Rotorkörpers (13, 29) des Rotors gehaltert werden,
**dadurch gekennzeichnet ,**
**dass** der Rotorkörper mit einem Außenring (19, 28), einer Rotornabe (20), zur Kopplung mit einer Motorwelle des Elektromotors, und einem Aussteifungselement (21, 27), zur Verbindung von Außenring und Rotornabe, ausgebildet wird, wobei das Aussteifungselement mit zwischen dem Außenring und der Rotornabe sternförmig verlaufenden Streben (22) ausgebildet wird, wobei das Aussteifungselement aus einem Faserverbundwerkstoff mit einem Faserstrang ausgebildet wird.

14. Verfahren nach Anspruch 13,
**dadurch gekennzeichnet ,**
**dass** das Aussteifungselement in einer Abfolge von Arbeitsschritten ausgebildet wird:
a). Ausbilden einer ringförmigen Wicklung (33) durch Imprägnieren und Wickeln des Faserstrangs auf einen Umfang (34) einer aus Aufnahmesegmenten (31) gebildeten Aufnahmeeinrichtung (35);
b). Umformen der Wicklung mittels Umformsegmente (32) in zwischen den Aufnahmesegmenten ausgebildeten Umformbereichen (36) durch eine Bewegung der Umformsegmente auf ein Symmetriezentrum (37) der Aufnahmeeinrichtung hin;
c). Aushärten des Faserverbundwerkstoffs.

15. Verfahren nach Anspruch 14,
**dadurch gekennzeichnet ,**
**dass** nach dem Arbeitsschritt b). und vor dem Arbeitsschritt c). der Außenring (19, 28) durch Ausbilden einer zweiten ringförmigen Wicklung (38) durch Imprägnieren und Wickeln eines zweiten Faserstrangs auf den Umfang (34) der Aufnahmeeinrichtung (35) ausgebildet wird.

16. Verfahren nach Anspruch 14 oder 15,
**dadurch gekennzeichnet ,**
**dass** vor dem Arbeitsschritt a). die Rotornabe (20) durch Ausbilden einer weiteren ringförmigen Wicklung durch Imprägnieren und Wickeln eines weiteren Faserstrangs auf einen Kern der Aufnahmeeinrichtung, der einen Durchmesser der Motorwelle aufweist, ausgebildet wird.

17. Verfahren nach einem der Ansprüche 14 bis 16,
**dadurch gekennzeichnet ,**
**dass** die Magnete (11) vor oder nach dem Arbeitsschritt c). angeordnet werden.

18. Verfahren nach einem der Ansprüche 13 bis 17,
**dadurch gekennzeichnet ,**
**dass** der Außenring (19, 28) mit einer Vorspannung ausgebildet wird.

19. Verwendung eines Aussteifungselements (21, 27) für einen Rotor (10) eines Elektromotors, insbesondere bürstenloser Scheibenläufermotor, Synchronmotor, Schrittmotor oder dergleichen, wobei das Aussteifungselement mit zwischen einem Außenring (19, 28) und einer Rotornabe (20) eines Rotorkörpers (13, 29) des Rotors sternförmig verlaufenden Streben (22) ausgebildet ist, wobei das Aussteifungselement zur Verbindung von Außenring und Rotornabe ausgebildet ist, wobei das Aussteifungselement aus einem Faserverbundwerkstoff mit einem Faserstrang ausgebildet ist.
